# FASCICULE DE BREVET EUROPEEN

(11) **EP 0 593 690 B1**
(45) Date de publication et mention de la délivrance du brevet: **01.10.2003**
(21) Numéro de dépôt: 93903792.5
(22) Date de dépôt: 10.03.1993
(51) Int. Cl.: H04M 17/02, H04M 1/00, H04M 19/08

(54) **PROCEDE ET DISPOSITIF PERMETTANT LA REDUCTION DE CONSOMMATION DE PUISSANCE DANS UN TELEPHONE PUBLIQUE**
VERFAHREN UND VORRICHTUNG ZUR REDUZIERUNG DES LEISTUNGSVERBRAUCHS IN EINEM ÖFFENTLICHEM FERNSPRECHGERÄT
PUBLIC TELEPHONE POWER CONSUMPTION REDUCING METHOD AND DEVICE

(30) Priorité: 12.03.1992 CH 80592
(43) Date de publication de la demande: 27.04.1994
(73) Titulaire: IPM International SA, 1211 Genève 16 (CH)
(72) Inventeur: WENGER, Joel, CH-1224 Chêne-Bougeries (CH); BROCCARD, Philippe, CH-1206 Genève (CH)
(74) Mandataire: Wenger, Joel-Théophile
(86) Numéro de dépôt international: CH9300064
(87) Numéro de publication internationale: WO93018608

(56) Documents cités:
- EP-A- 0 343 528
- EP-A- 0 349 302
- PATENT ABSTRACTS OF JAPAN vol. 009, no. 061 (E-303)19 Mars 1985
- PATENT ABSTRACTS OF JAPAN vol. 013, no. 359 (E-804)10 Août 1989
- PATENT ABSTRACTS OF JAPAN vol. 015, no. 295 (E-1094)26 Juillet 1991

## Description

La présente invention concerne le domaine des appareils électriques comprenant des microprocesseurs, et en particulier un procédé et un dispositif réduisant leur consommation moyenne d'énergie électrique.

Pour certains appareils électriques, la nécessité de limiter la consommation d'énergie électrique à une valeur minimale est très importante. Ceci est particulièrement vrai pour les stations téléphoniques publiques. En effet, celles-ci sont généralement alimentées par la ligne téléphonique et l'énergie électrique autorisée qu'on peut prélever pour le fonctionnement est très limitée.

Le problème devient plus délicat au fur et à mesure que les stations téléphoniques publiques deviennent de plus en plus perfectionnées.

Le document EP-A- 0 275 566 décrit un procédé pour réduire la consommation électrique d'une station téléphonique publique, dans laquelle l'installation de commande comprend un microprocesseur. Dans ce procédé, la fréquence du cycle de base du système, commandée extérieurement, se trouve coupée par le microprocesseur au moyen d'un signal de coupure généré intérieurement à un instant donné, et rétablie à un moment ultérieur. au moyen d'un signal de rétablissement généré extérieurement, le signal de rétablissement étant dérivé d'une horloge de commande dont la fréquence est faible en comparaison de la fréquence du cycle de base du système. Ce procédé présente les inconvénients suivants:
- le système ne fonctionne qu'à une seule fréquence, celle de l'horloge système (Systemtakt). L'horloge de commande (Steuertakt) ne fait qu'enclencher ou déclencher l'horloge du système. Pendant le temps qui sépare un tel déclenchement de l'enclenchement suivant, le microprocesseur est paralysé et n'est pas en mesure de reconnaître des interrupts ou conditions externes qui devraient normalement le faire réagir;
- le microprocesseur ne peut pas gérer le temps, car l'horloge système est interrompue de façon intermittente;
- on voit facilement que l'économie d'énergie réalisable ne peut pas dépasser 50 % dans le meilleur des cas.

Le document EP-A- 0 391 543 décrit une horloge de microprocesseur pour station téléphonique publique, dans laquelle un périphérique de microprocesseur envoie un interrupt simultanément à l'accélération du signal d'horloge lorsqu'un paquet de données est reçu du central téléphonique. L'interrupt est traité avec l'aide du signal accéléré d'horloge pour réduire le temps de réponse du système, ce qui permet de réduire la fréquence normale d'horloge pour économiser de l'énergie.
Ce procédé présente l'inconvénient de se reposer excessivement sur le périphérique du microprocesseur.

Dans ce document, on suppose que le microprocesseur est le principal consommateur d'énergie et on se contente de réduire sa consommation, sans s'attaquer à celle du périphérique, qui peut être également importante. La consommation globale de l'appareil n'est donc pas suffisamment réduite.
Des procédés sont connus, par exemple du brevet Européen N° EP-A- 0 155 126, dans lesquels un oscillateur fournit des impulsions d'horloge nécessaires au fonctionnement du microprocesseur, et où un événement extérieur attendu, ou interrupt, comme par exemple l'entrée d'une pièce de monnaie dans la fente appropriée d'un appareil téléphonique public, provoque le passage d'un sous-ensemble de l'appareil, à savoir le système de reconnaissance et d'évaluation de pièces, de l'état de veille à l'état actif.

Cependant, dans ces procédés, le contrôle de la consommation électrique du microprocesseur reste rudimentaire. Pendant l'état de veille, le microprocesseur reste alimenté à la fréquence normale, ce qui induit une consommation encore relativement élevée d'énergie électrique.

EP-A-0 343 528 (D1) décrit un système pour un téléphone mobile dont une réduction substantielle de l'énergie peut être atteinte lors de l'interruption de la fréquence d'horloge du microprocesseur pendant ses phases d'inactivité.

Une premiére approche vers un contrôle plus fin de la fréquence du microprocesseur a été décrite dans les documents JP 3104360, JP 1119155 et JP 59200537. Elle consiste à définir des états dans lesquels la fréquence doit être à son maximum ainsi que des états dans lesquels une fréquence réduite peut suffire. Par état on entend une période qui dure entre quelques secondes, par exemple pour traiter un appel entrant, à quelques minutes lors de l'utilisation des fonctions avancées du téléphone comme le répertoire téléphonique. Une contrainte majeure de ces solutions est d'imposer le traitement des tâches évoluées à la fréquence maximum. Il faut rappeler également que c'est dans ces états que d'autres consommateurs vont intervenir tels que l'accepteur de pièce, l'éclairage des boutons ou l'affichage. C'est pourquoi, les solutions proposées ne permettent pas de réduire l'énergie maximale consommée et ne font que réduire l'énergie moyenne. Pourtant, lorsque l'on se trouve sur une ligne téléphonique, c'est bien la valeur maximale qui est déterminante.

L'invention qui va être décrite permet d'abaisser encore plus et de façon très appréciable la consommation d'énergie électrique pour les stations téléphoniques automatiques équipées d'un dispositif tel que décrit dans le préambule de la revendication 1, par les moyens décrits dans la partie caractérisante de cette même revendication.

La solution proposée ici est basée sur le fait que les microprocesseurs consomment surtout de l'énergie électrique lors de la commutation des impulsions d'horloge utilisées pour les faire fonctionner. Donc si pendant les périodes d'inactivité d'un microprocesseur on abaisse sa fréquence d'horloge, on diminue alors automatiquement sa consommation d'énergie électrique.

L'oscillateur principal, aux fréquences usuelles de 4 MHz, présentant une consommation non négligeable (environ 1 mA), l'invention prévoit de façon générale un système d'oscillateurs placés en amont du gestionnaire d'horloge, l'ensemble étant susceptible de faire varier la fréquence d'horloge parvenant au microprocesseur.

Le principe consiste à confier la veille et le rythme de commutation entre fréquence normale et fréquence secondaire à un gestionnaire d'horloge comprenant une base de temps fixe, de fréquence encore bien inférieure à la fréquence secondaire choisie pour l'état de veille du microprocesseur. La fréquence de cette base de temps fixe est dépendante de la fréquence secondaire. Si la fréquence normale de fonctionnement du microprocesseur est de 4 MHz, la fréquence secondaire caractéristique de l'état de veille est par exemple de 250 KHz, et la fréquence de la base de temps fixe est par exemple de 50 Hz.

Une première ligne relie le gestionnaire au microprocesseur et permet d'envoyer les impulsions de base de temps fixe.

Chaque fois qu'une impulsion, correspondant à la fréquence de la base de temps fixe, est envoyée via une deuxième ligne par le gestionnaire d'horloge au microprocesseur, celui-ci passe à l'état actif et effectue un certain nombre de contrôles de l'état des périphériques (clavier, contact de combiné, etc). Lorsque le microprocesseur a terminé ces contrôles, il ordonne le cas échéant au gestionnaire, par une troisième ligne, de repasser à l'état inactif.

Dans une autre forme de réalisation de l'invention, le système d'oscillateurs est constitué de deux oscillateurs, l'un, dit oscillateur principal, délivrant la fréquence normale, et l'autre, dit oscillateur secondaire, délivrant la fréquence secondaire. Le gestionnaire coupe l'alimentation de l'oscillateur principal lorsque l'oscillateur secondaire, générant la fréquence secondaire de valeur inférieure à la fréquence normale, est sélectionné par le gestionnaire. Les seuls signaux subsistant sur la deuxième ligne sont ceux générés par l'oscillateur secondaire.

Dans une forme particulière de réalisation de l'invention, la fréquence normale est de 4 MHz et la fréquence secondaire de 250 KHz. Dans le cas d'un diviseur de fréquence, cette fréquence secondaire n'est autre que la fréquence normale divisée par 16 par le gestionnaire.

D'autres avantages de l'invention apparaîtront ci-après dans la description détaillée d'une forme de réalisation de l'invention, par référence au dessin annexé, constitué des figures 1 à 4 où:
- la figure 1 représente un diagramme-bloc montrant schématiquement le fonctionnement du procédé faisant appel à un diviseur de fréquence;
- la figure 1a représente le même diagramme-bloc dans le cas d'un système d'oscillateurs comprenant deux oscillateurs;
- la figure 2 représente un organigramme du processus d'action du gestionnaire d'horloge 2;
- la figure 3 représente un schéma bloc du gestionnaire d'horloge 2 de la figure 1, dans le cas d'un oscillateur unique avec division de fréquence;
- la figure 4 représente schématiquement l'implantation des circuits logiques 5.de la figure 1, ainsi que de

Le passage à l'état actif peut aussi être déterminé par l'arrivée d'un interrupt qui est lui-même la conséquence d'un événement extérieur: arrivée d'une impulsion de taxe depuis le central, entrée d'une pièce dans une fente, surveillance des tensions d'alimentation, etc.

L'ordre communiqué au gestionnaire par le microprocesseur dépend de l'activité de ce microprocesseur. Il peut décider de commuter ou de rester sur la fréquence normale si le besoin s'en fait sentir (par exemple chronométrage d'une période telle que la durée correspondant à une taxe). Lorsque les contrôles ont déterminé l'absence de chronométrage, le microprocesseur ordonne au gestionnaire de passer à l'état de veille.

Dans une forme particulière de réalisation de l'invention, le gestionnaire fait varier la fréquence . d'horloge de manière discontinue, entre des valeurs discrètes. Cette réalisation est différente d'une réalisation dans laquelle toutes les valeurs de fréquences comprises entre un minimum et un maximum peuvent a priori être choisies.

Dans une forme particulière de réalisation de l'invention, la fréquence ne peut prendre que deux valeurs: la valeur de la fréquence normale du cycle de base du microprocesseur, dite fréquence normale, et une valeur plus faible, dite fréquence secondaire, choisie pour faire baisser la consommation électrique du microprocesseur lorsque les conditions font qu'il peut se mettre à l'état inactif.

Dans une forme de réalisation particulière de l'invention, le système d'oscillateurs est constitué d'un oscillateur unique, délivrant la fréquence normale, et le gestionnaire consiste en un diviseur de fréquence. l'unité centrale du microprocesseur 4 et des bus reliant physiquement ces éléments.

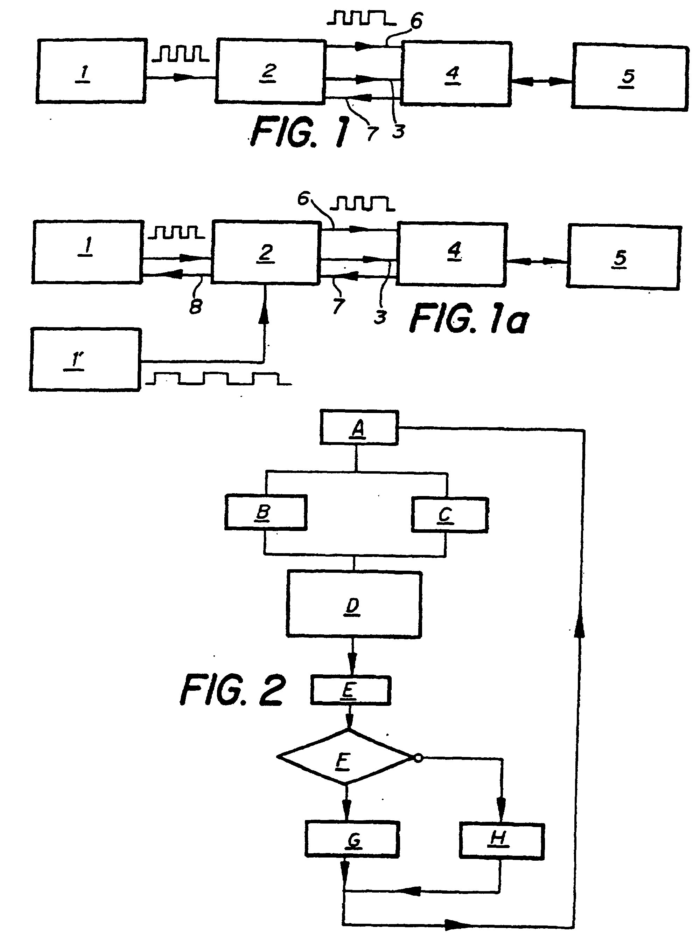

Dans la figure 1,
- le rectangle 1 représente l'oscillateur;
- le rectangle 2 représente le gestionnaire d'horloge;
- le rectangle 4 représente le microprocesseur;
- le rectangle 5 représente l'ensemble des circuits pilotés par le microprocesseur 4 lorsqu'il est actif.

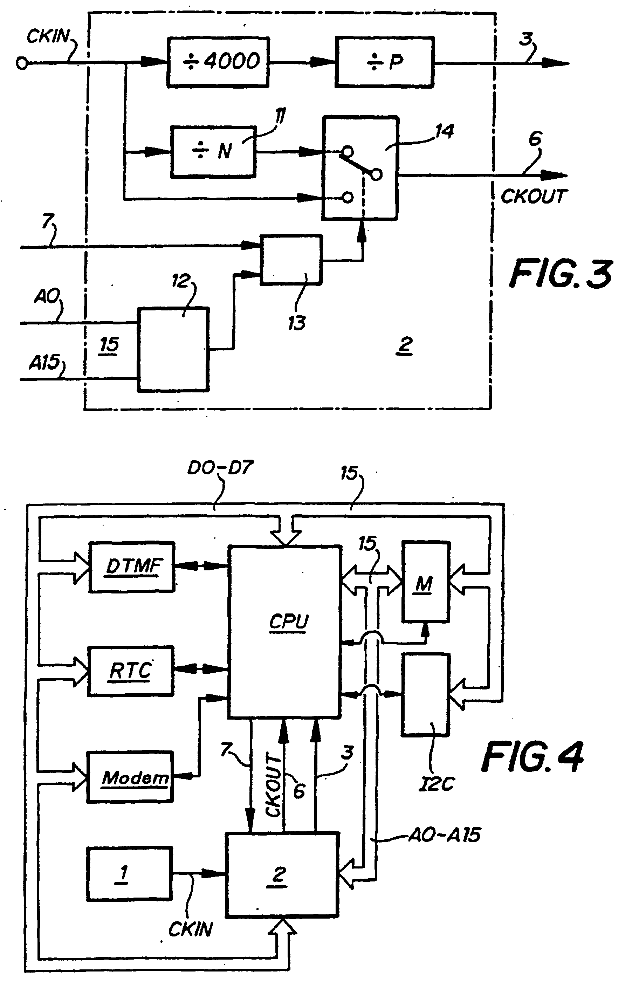

Une première ligne 3 relie la base de temps fixe, contenue dans le gestionnaire 2, au microprocesseur 4. Elle véhicule du gestionnaire 2 vers le microprocesseur 4 les signaux de la base de temps fixe, dont la fréquence est dépendante de la fréquence secondaire par un diviseur de fréquence qui divise cette fréquence par la valeur P (figure 3). Cette fréquence de la base de temps fixe est choisie beaucoup plus basse que la valeur minimale d'une fréquence d'horloge, véhiculée sur une deuxième ligne 6 entre le gestionnaire 2 et le microprocesseur 4. Cette fréquence d'horloge est déterminée à la fois par le gestionnaire 2 et par le microprocesseur 4, de la façon suivante:
- le microprocesseur 4 effectue un ensemble de contrôles à chaque réception d'une impulsion de la base de temps fixe par la première ligne 3. A l'issue de cet ensemble de contrôles, un ordre est généré par le microprocesseur 4 à destination du gestionnaire 2 et est véhiculé par une troisième ligne 7, munie sur la figure 1 d'une flèche allant vers la gauche;
- cet ordre est interprété par le gestionnaire 2 qui fait varier en conséquence la fréquence d'horloge des impulsions d'horloge véhiculées vers le microprocesseur 4 via la deuxième ligne 6.

L'optimisation de la fréquence d'horloge par interaction constante entre le gestionnaire 2 et le microprocesseur 4 permet à son tour de réduire au minimum la consommation d'énergie du microprocesseur 4, et donc de la station.

Les circuits 5 pilotés par le microprocesseur 4 quand il est à l'état actif, sont reliés à celui-ci par un bus d'adresse 15, connu en soi.

Le retour à la fréquence normale des impulsions d'horloge, pour que le microprocesseur 4 puisse reprendre son activité normale, c'est-à-dire effectuer des gestions de temps de programme, se fait:
- soit grâce à la base de temps dont les signaux sont transmis par la première ligne 3 au microprocesseur 4, qui périodiquement commande ainsi par la troisième ligne 7 au gestionnaire 2 de revenir sur la fréquence normale des impulsions d'horloge,
- soit automatiquement, et de manière connue, à la détection de n'importe quel interrupt, c'est-à-dire par exemple un signal de taxe, l'introduction d'une pièce dans l'automate, le fait de presser une touche du clavier, le fait de décrocher ou de raccrocher le combiné, grâce à une commande quelconque non représentée sur la figure 1. Le gestionnaire 2 reçoit les adresses A0 à A15 du bus d'adresse 15 (figure 3) du microprocesseur 4, ce qui lui permet de détecter automatiquement grâce au comparateur 12, les interrupts, et de commuter sur la fréquence normale dès la reconnaissance de ceux-ci, sans l'aide de la troisième ligne 7. On a de ce fait une réaction du microprocesseur 4 aux interrupts à la fréquence normale, ce qui fait que les performances ne sont pas diminuées. Pendant l'intervalle correspondant au reste des 20 ms dans le cas où la fréquence de la base de temps fixe est de 50 Hz, le microprocesseur travaille à la fréquence secondaire réduite.

La figure 1a représente un diagramme-bloc pour la forme de réalisation de l'invention faisant appel à un système d'oscillateurs comprenant deux oscillateurs:
- un oscillateur principal 1, délivrant une fréquence , haute dite normale;
- un oscillateur secondaire 1', délivrant une fréquence basse dite secondaire.
Lorsque les conditions prévalant dans la station autorisent la mise à l'état inactif du microprocesseur 4, celui-ci communique au gestionnaire 2, par la troisième ligne 7, l'ordre de mise en état inactif. Celui-ci envoie par la ligne 8, qui n'apparaît que dans cette forme de réalisation de l'invention représentée par la figure la, un ordre de déclenchement à l'oscillateur principal 1. Celui-ci est alors coupé, et les seules impulsions parvenant au gestionnaire sont les impulsions de fréquence secondaire, transmises au microprocesseur par la deuxième ligne 6, ainsi que les impulsions de la base de temps fixe, transmises au microprocesseur 4 par la première ligne 3.

La figure 2 représente un organigramme détaillant le processus selon lequel le gestionnaire 2 passe à la fréquence normale suite à un interrupt, puis tente ensuite de repasser à la fréquence secondaire générant des économies d'énergie électrique.

Cet organigramme, qui doit être lu de haut en bas, comprend les étapes suivantes:
- l'étape A désigne un état d'attente du microprocesseur 4, que la fréquence soit normale ou secondaire.
- l'étape B désigne l'apparition d'un interrupt externe, de type aléatoire.
- l'étape C, qui est une alternative à l'étape B ayant le même résultat, à savoir le passage en fréquence normale, désigne une action logicielle interne au gestionnaire 2, c'est-à-dire un interrupt interne, provoqué soit par la base de temps fixe du gestionnaire, soit par le bouclement de sous-cycles du microprocesseur, appelés communément timers.
   Dans ces deux cas, le passage à la fréquence normale se fait automatiquement par le gestionnaire 2, par la reconnaissance d'un interrupt soit externe, soit interne.
- l'étape D désigne le passage ou le maintien en fréquence normale.
- l'étape E désigne un état dans lequel le microprocesseur 4 effectue au moins un cycle de contrôles. Ce cycle ne peut s'effectuer dans de bonnes conditions que si la fréquence est normale. Il peut comporter la mise en marche de timers du microprocesseur 4, qui doivent impérativement être exécutés à la fréquence normale jusqu'à leurs échéances respectives pour que la suite des opérations s'effectue correctement.
- l'étape F représente, après un cycle de travail du microprocesseur 4, une routine interne du microprocesseur 4 qui teste l'arrivée ou non à échéance des divers timers.
- l'étape G représente le chemin que prend le processus en cas de résultat positif du test précédent: tous les timers étant arrivés à échéance, le microprocesseur 4 peut passer à l'état inactif et la fréquence d'horloge à la fréquence secondaire. Ce passage à la fréquence secondaire se fait par l'envoi d'une commande au circuit intégré spécifique d'une application, communément appelé ASIC, dont fait partie intégrante, dans le but de réduire le nombre de circuits intégrés, le gestionnaire 2.
- l'étape H représente le chemin que prend le processus en cas de résultat négatif du test de l'étape F: l'un au moins des timers n'est pas arrivé à échéance, on ne peut pas faire passer le microprocesseur 4 à l'état inactif, donc il faut maintenir la fréquence normale.
- lorsque les étapes G ou H sont effectuées, le processus reprend à l'étape A.

La figure 3 représente un schéma bloc du gestionnaire d'horloge 2 incorporant un diviseur de fréquence dans le cas d'un oscillateur unique. Ce gestionnaire 2 fait partie du circuit intégré spécifique d'une application dit ASIC. L'oscillateur 1 est relié au gestionnaire 2 par le point CKIN, et délivre une fréquence fixe de 4 MHz dans le présent exemple. Le microprocesseur 4 est relié au gestionnaire 2 par la deuxième ligne 6 qui aboutit au point CKOUT. Entre ces deux points, le gestionnaire comporte, dans cette forme de réalisation de l'invention, un diviseur 11 de la fréquence par une puissance N de 2, N pouvant éventuellement varier. La valeur maximale de N est déterminée par la fréquence minimale où le microprocesseur 4.peut fonctionner normalement.
La sélection entre les deux fréquences se fait soit par la troisième ligne 7 (véhiculant la commande appelée ci-après SPEED) soit par la reconnaissance d'un interrupt grâce à un comparateur 12 connecté sur les adresses AO à A15 du bus d'adresse 15. La référence 13 représente une fonction OU, constituée d'une part d'un flip-flop de type D qui mémorise l'état du comparateur 12 (arrivée d'un interrupt) en synchronisme avec l'exécution des ordres internes du microprocesseur 4, et d'autre part la commande spécifique du microprocesseur 4 (ligne 7), ces deux conditions déterminant la position du commutateur 14, et de ce fait la fréquence véhiculée par la ligne 6.

La fonction OU opère de la façon détaillée dans le paragraphe ci-après, dans lequel 1 désigne l'état positif et 0 l'état négatif:
- si le bus d'adresse 15 est à 1 et SPEED également à 1, le résultat est aussi à 1;
- si le bus d'adresse 15 est à 1 et SPEED est à 0, le résultat est à 1;
- si le bus d'adresse 15 est à 0 et SPEED est à 1, le résultat est à 1;
- si le bus d'adresse 15 est à 0 et SPEED est à 0, le résultat est à 0.

La reconnaissance d'un interrupt par le comparateur 12 permet de passer à la fréquence normale quel que soit l'état de la commande SPEED arrivant par la troisième ligne 7. Le résultat de cette reconnaissance arrive sur le commutateur 14 et détermine directement la fréquence de la deuxième ligne 6 allant au microprocesseur 4.

Dans l'exemple choisi, relatif à une réalisation faisant appel à un diviseur de fréquence, la fréquence de la base de temps fixe est de 20 millisecondes. Cette base de temps fixe fait aussi partie du circuit intégré spécifique d'une application dit ASIC représenté à la figure 3. Elle comprend notamment deux diviseurs en cascade, l'un divisant par 4000, et l'autre par un entier P variant de 1 à 128. Dans l'exemple représenté, on choisit une fréquence normale d'oscillateur égale à 4 MHz et N égal à 20. On obtiendra alors un signal de base de temps fixe tous les 20 ms, c'est-à-dire une fréquence égale à 50 Hz.

Cette valeur a l'avantage de permettre d'utiliser les impulsions d'horloge pour générer les signaux émis depuis le clavier numérique de la station, lorsque celle-ci appelle un numéro de téléphone formé par l'usager sur le clavier. Les signaux de clavier se font à une fréquence pouvant varier, dans la plupart des pays, entre une valeur haute "HIGH", correspondant à une période de 40 ms, et une valeur basse "LOW", correspondant à une période de 60 ms. Cependant, en France l'utilisation d'une base de temps de 16,6 ms est requise pour former un numéro d'appel. C'est la raison de la présence d'un diviseur par P. La valeur de P fait l'objet d'un réglage avant la livraison de la station. Par ailleurs, 20 ms est le maximum autorisé pour éviter que le système de détection des pièces introduites dans la fente de paiement de la station ne perde des pièces entrées immédiatement à la suite les unes des autres.

Le choix de la fréquence de 250 KHz est lié aux caractéristiques du microprocesseur 4 utilisé. C'est la fréquence minimale permettant un fonctionnement sans risque.

La ligne téléphonique délivre environ 150 mW. Plus les fréquences utilisées sont basses, ou à l'inverse les périodes élevées, plus la partie intelligente de la station est économe en énergie et plus il reste d'énergie stockable en vue, par exemple, d'actionner les aimants du sélecteur de pièces.

La figure 4 montre schématiquement, sur la plaque logique de la station, l'implantation des circuits logiques 5 de la figure 1, avec la connexion des différents composants au moyen du bus d'adresse 15, représenté par des flèches larges, dans le présent exemple de réalisation. Il va de soi que les flèches maigres peuvent aussi comprendre plusieurs conducteurs, ou plus généralement plusieurs moyens de transmission de signaux, par exemple par multiplexage.

Le bus d'adresse 15 relie le modem, signifiant modulateur-démodulateur, le RTC, signifiant Real Time Clock, l'émetteur-récepteur DTMF, signifiant Dual Tone Multi Frequency, le CPU, signifiant Central Processing Unit, la mémoire M et l'interface I2C. Le bus d'adresse 15, ou voie de circulation, comprend des adresses de poids fort A8 à A15 et des adresses de poids faibles A0 à A7 issues d'un démultiplexeur (non représenté). A chaque type d'interrupt correspond une adresse, ce qui permet notamment au gestionnaire 2, lorsqu'une adresse correspondant à un interrupt apparaît sur le bus d'adresse 15, de passer en fréquence normale.

Pour un microprocesseur 4 consommant en moyenne 3 mA avec des impulsions d'horloge de 4 MHz, on verra cette intensité tomber à des valeurs entre 0,5 et 1 mA avec une fréquence réduite à 250 KHz.

Sur les 20 ms séparant deux signaux de base de temps fixe, 5 ms verront une consommation de 3 mA tandis que les 15 autres ms verront une consommation de 0,5 mA. Ceci donne une consommation moyenne de 1,12 mA donc un rapport de 0.37. Ceci représente une économie de 63 %; en valeur moyenne, cette économie peut varier de 40 à 65 %.

Une réduction supplémentaire de la fréquence à 10 KHz ou même moins a pour effet une réduction correspondante de l'énergie électrique consommée par le microprocesseur 4.

## Revendications

1. Procédé pour réduire la consommation d'énergie électrique moyenne d'une station téléphonique comprenant un microprocesseur (4), ainsi que d'un gestionnaire (2) pour faire varier la fréquence d'horioge appliquée au microprocesseur (4), procédé consistant à temporairement diminuer la fréquence appliquée au microprocesseur (4), **caractérisé en ce que** ce microprocesseur (4) commute plusieurs fois par seconde entre des états d'activités et des états de veilles et commande au gestionnaire (2) par une troisième ligne (7) l'abaissement de la fréquence d'horloge lors de la commutation en état de veille, et **en ce que** le gestionnaire (2) détecte l'entrée du microprocesseur (4) dans un état d'activité et rétablit la fréquence d'horloge du microprocesseur (4) à sa valeur normale et fourni au microprocesseur (4), par l'intermédiaire d'une première ligne (3), une impulsion de base de temps fixe.

2. Procédé selon la revendication 1, **caractérisé en ce que** la commutation entre des états d'activités et des états de veilles s'effectue 50 fois par seconde.

3. Procédé selon la revendication 1, **caractérisé en ce que** la détection de l'entrée du microprocesseur (4) dans un état d'activité s'effectue par la reconnaissance d'une interruption.

4. Dispositif pour réduire la consommation d'énergie électrique moyenne d'une station téléphonique, comprenant un microprocesseur (4) qui est susceptible de passer temporairement d'un état d'activité à un état de veille économe en énergie, un système d'oscillateurs (1,1') foumissant des impulsions d'horloge nécessaires au fonctionnement du microprocesseur (4), et d'un gestionnaire (2) agencé pour faire varier la fréquence d'horloge arrivant au microprocesseur (4) **caractérisé en ce que** le gestionnaire (2) dispose de moyens pour reconnaître le passage du microprocesseur (4) de l'état de veille à l'état actif et de moyens pour appliquer audit microprocesseur (4) la fréquence normale ainsi que de moyens pour foumir au microprocesseur (4), par l'intermédiaire d'une première ligne (3), une impulsion de base de temps fixe, et **en ce que** le microprocesseur (4) dispose d'une troisième ligne (7) pour commander au gestionnaire (2) le passage à la fréquence réduite avant de se mettre à l'état de veille.

5. Dispositif selon la revendication 4, **caractérisé en ce que** les moyens pour reconnaître le passage du microprocesseur (4) de l'état de veille à l'état actif sont agencés pour interpréter l'arrivée d'une interruption sur le microprocesseur (4).

6. Dispositif selon les revendications 4 et 5, **caractérisé en ce que** le gestionnaire (2) dispose de moyens pour faire varier la fréquence d'horloge de façon discontinue.

7. Dispositif selon les revendications 4 à 6, **caractérisé en ce que** le gestionnaire (2) comprend un système d'oscillateur qui est constitué par un oscillateur unique et **en ce que** le gestionnaire (2) comprend un diviseur de fréquence pour la génération de la fréquence réduite.

8. Dispositif selon la revendication 7, **caractérisé en ce que** le système d'oscillateurs comprend deux oscillateurs, l'un (1) dit oscillateur principal délivrant la fréquence supérieure dite fréquence normale, l'autre (1') dit oscillateur secondaire délivrant la fréquence inférieure dite fréquence réduite, et **en ce que** le gestionnaire (2) comprend des moyens pour déclencher l'oscillateur principal (1) lorsque la fréquence secondaire est suffisante pour l'état de veille, et pour le réenclencher lorsque la fréquence normale est nécessaire pour le travail du microprocesseur (4).

9. Dispositif selon la revendication 8, **caractérisé en ce que** la fréquence normale est de 4 MHz, la fréquence réduite de 250 KHz et la fréquence de la base de temps fixe de 50 Hz.

## Patentansprüche

1. Verfahren zur Verminderung des mittleren elektrischen Energieverbrauchs einer Fernsprechstelle mit einem Mikroprozessor (4) sowie ein Verwalter (2), um die an den Mikroprozessor (4) angelegte Taktfrequenz variieren zu können, wobei das Verfahren darin besteht, die an den Mikroprozessor (4) angelegte Frequenz vorübergehend zu verringern, **dadurch gekennzeichnet, dass** dieser Mikroprozessor (4) mehrere Male pro Sekunde zwischen Zuständen der Aktivität und Zuständen der Inaktivität kommutiert und bei der. Kommutierung in den Inaktivzustand über eine dritte Leitung (7) dem Verwalter (2) die Herabsetzung der Taktfrequenz befiehlt, und dass der Verwalter (2) das Eintreten des Mikroprozessors (4) in einen Zustand der Aktivität aufspürt und die Taktfrequenz des Mikroprozessors (4) auf ihren normalen Wert zurückführt und dem Mikroprozessor (4) über eine erste Leitung (3) einen Impuls der festen Zeitbasis liefert.

2. Verfahren gemäß Anspruch 1, **dadurch gekennzeichnet, dass** die Kommutierung zwischen den Zuständen von Aktivität und den Zuständen von Inaktivität 50mal pro Sekunde erfolgt.

3. Verfahren gemäß Anspruch 1, **dadurch gekennzeichnet, dass** das Aufspüren des Eintretens des Mikroprozessors (4) in einen Zustand der Aktivität durch das Erkennen eines Unterbrechungssignals erfolgt.

4. Vorrichtung zur Verminderung des mittleren elektrischen Energieverbrauchs einer Fernsprechstelle mit einem Mikroprozessor (4), der in der Lage ist, vorübergehend von einem Zustand der Aktivität in einen energiesparenden Zustand der Inaktivität überzugehen, wobei ein System von Oszillatoren (1, 1') die Zeitimpulse liefert, die für den Betrieb des Mikroprozessors (4) erforderlich sind, sowie mit einem Verwalter (2), der dafür eingerichtet ist, die beim Mikroprozessor (4) anlangende Taktfrequenz variieren zu lassen, **dadurch gekennzeichnet, dass** der Verwalter (2) über Mittel verfügt, um den Übergang des Mikroprozessors (4) vom Zustand der Inaktivität in den aktiven Zustand zu erkennen, sowie Mittel, um an den benannten Mikroprozessor (4) die normale Frequenz anzulegen, wie auch Mittel, um dem Mikroprozessor (4) über eine erste Leitung (3) einen Impuls der festen Zeitbasis zu liefern, und dadurch, dass der Mikroprozessor (4) über eine dritte Leitung (7) verfügt, um dem Verwalter (2) den Übergang zur verringerten Frequenz zu befehlen, bevor er sich in den Zustand der Inaktivität begibt.

5. Vorrichtung gemäß Anspruch 4, **dadurch gekennzeichnet, dass** die Mittel zum Erkennen des Übergangs des Mikroprozessors (4) vom Zustand der Inaktivität in den aktiven Zustand so eingerichtet sind, dass sie die Ankunft eines Unterbrechungssignals beim Mikroprozessor (4) interpretieren.

6. Vorrichtung gemäß Ansprüchen 4 und 5, **dadurch gekennzeichnet, dass** der Verwalter (2) über Mittel verfügt, um die Taktfrequenz in diskontinuierlicher Weise variieren zu lassen.

7. Vorrichtung gemäß Ansprüchen 4 bis 6, **dadurch gekennzeichnet, dass** der Verwalter (2) ein Oszillatorsystem umfaßt, das aus einem einzigen Oszillator besteht, und dadurch, dass der Verwalter (2) einen Frequenzteiler zur Erzeugung der verringerten Frequenz umfaßt.

8. Vorrichtung gemäß Anspruch 7, **dadurch gekennzeichnet, dass** das Oszillatorsystem zwei Oszillatoren umfaßt, wobei der eine (1), Hauptoszillator genannt, die höhere Frequenz, normale Frequenz genannt, liefert, während der andere (1'), Nebenoszillator genannt, die geringere Frequenz, verminderte Frequenz genannt, liefert, und dass der Verwalter (2) Mittel umfaßt, um den Hauptoszillator (1) auszuschalten, wenn die Nebenfrequenz für den Zustand der Inaktivität genügt, und ihn wieder einzuschalten, wenn die normale Frequenz für die Arbeit des Mikroprozessors (4) erforderlich ist.

9. Vorrichtung gemäß Anspruch 8, **dadurch gekennzeichnet, dass** die normale Frequenz 4 MHz, die verminderte Frequenz 250 kHz und die Frequenz der festen Zeitbasis 50 Hz beträgt.

## Claims

1. Process for reducing the average electrical energy consumption of a telephone station comprising a microprocessor (4), as well as a handler (2) for varying the clock frequency arriving at the microprocessor (4), this process consisting of temporarily lowering the frequency arriving at the microprocessor (4), **characterized in that** the microprocessor (4), commutes several times a second between active states and inactive states and controls the handler (2), via a third line (7), the lowering of the clock frequency during the commutation in the inactive state, wherein the handler (2) senses the entrance of the microprocessor (4) in an active state and reinstate the clock frequency of the microprocessor (4) at its normal value and provides the microprocessor (4) with a fix base time impulse through a first line (3).

2. Process according to claim 1, **characterized in that** the commutation between active and inactive states occurs 50 times a second.

3. Process according to claim 1, **characterized in that** the detection of the entrance of the microprocessor (4) in an active state occurs by the recognition of an interrupt.

4. Device for reducing the average electrical energy consumption of a telephone station comprising a microprocessor (4), which is able to temporarily commute from an active to an inactive energy sparing state; an oscillator system (1, 1') providing clock pulses necessary to the functioning of the microprocessor (4), and a handler for varying the clock frequency arriving at the microprocessor (4), **characterized in that** the handler (2) has means for recognizing the changing from the inactive to the active state and means for applying to said microprocessor (4), the normal frequency, as well as means for providing the microprocessor (4) with a fix base time impulse through a first line (3), and wherein the microprocessor (4) has a third line (7) for controlling the handler (2) to pass to the reduced frequency before setting to the inactive state.

5. Device according to claim 4, **characterized in that** the means for recognizing the changing of the microprocessor (4) from the inactive to the active state are disposed to interpret the arrival of an interrupt on the microprocessor (4).

6. Device according to claims 4 and 5, **characterized in that** the handler (2) comprises means to vary the clock frequency continuously.

7. Device according to claim 4 to 6, **characterized in that** the handler (2) comprises an oscillator system consisting of a single oscillator and **in that** the handler (2) comprises a frequency divider for generating the reduced frequency.

8. Device according to claim 7, **characterized in that** the system of oscillators comprises two oscillators, one (1) termed the main oscillator delivering the higher frequency termed the normal frequency, the other (1') termed the secondary oscillator delivering the lower frequency termed the secondary frequency, and the handler (2) comprises means for triggering the main oscillator (1) when the secondary frequency is sufficient for the inactive state, and for re-engaging it when the normal frequency is necessary for the microprocessor (4) to work.

9. Device according to claim 8, **characterized in that** the normal frequency is 4 MHz, the secondary frequency is 250 kHz and the frequency of the fixed time base is 50 Hz.
